# EUROPEAN PATENT APPLICATION

(11) **EP 1 919 180 A1**
(43) Date of publication of application: **07.05.2008**
(21) Application number: 07000089.8
(22) Date of filing: 04.01.2007
(51) Int. Cl.: H04N 1/195

(54) **Multipurpose image pickup device**

(30) Priority: 31.10.2006 CN 200620137500 U
(71) Applicant: Top Eight Industrial Corp., Taipei City 114 (TW)
(72) Inventor: Kuo, Claire Lee Jung, Taipei City 114 (TW)
(74) Representative: Viering, Jentschura & Partner

(57) **Abstract**

A multipurpose image pickup device is disclosed to include a housing having a built-in storage battery and a memory card slot for receiving a memory card for storing digital image files, a swivel bracket turnable in and out of a top recess of the housing, a movable rack turnable in and out of an opening of the swivel bracket, a lens holder pivoted to the movable rack and holding an image forming lens for taking pictures, a lock release for locking/unlocking the swivel bracket and the movable rack, and a mode selection switch switching between a computer connection mode for enabling the multipurpose image pickup device to be used as a webcam and a business card shooting mode for enabling the multipurpose image pickup device to be independently used to take the pictures of business cards.

## Description

### BACKGROUND OF THE INVENTION

### Field of the Invention

The present invention relates generally to an image pickup device and more particularly, to a multipurpose image pickup device that can be used as a webcam for connection to the internet, a business card camera for taking photos of business cards, as well as a card reader for reading data from a card.

### Description of the Related Art

Following fast development of information industry, a variety of internet and mobile communication devices have been disclosed and have appeared on the market. Many people intensively use these internet and mobile communication devices daily. For example, when a webcam is connected to a computer, it uploads images to the web server. Further, there are commercial business card scanners for scanning the images of business cards for further business card recognition, search, and management.

A webcam and a business card scanner are two different items for different purposes. Taiwan Patent Publication No. M289565 discloses a combination device, entitled "Business card picture shot and webcam combination structure" that combines the function of a webcam and the function of a business card scanner. This design comprises a base frame, a retractable frame coupled to the base frame, and a sliding support coupled to the retractable frame to support an image pickup device. This structure is folding collapsible for convenient carrying, and can be positioned on a desk for use as a webcam, or set for taking the picture of a business card for enabling the business card image file thus obtained to be stored in the computer for further recognition and search. However, this structure must be used with a computer to achieve the two webcam and business card picture shooting functions.

### SUMMARY OF THE INVENTION

The present invention has been accomplished under the circumstances in view. It is therefore the main object of the present invention to provide a multipurpose image pickup device that can be used as a webcam, a business card camera, as well as a card reader. When the multipurpose image pickup device is not connected to a computer, it can be used independently to take the pictures of business cards and to store the digital image files thus obtained in a memory card.

To achieve this and other objects of the present invention, the multipurpose image pickup device comprises a housing, the housing having a circuit board built therein, a top recess in a top side thereof, a mode selection switch electrically connected to the circuit board and switching between a computer connection mode and a business card picture shooting mode, at least one memory card slot electrically connected to the circuit board for receiving a memory card, a shutter release electrically connected to the circuit board, a communication port electrically connected to the circuit board for connection to a computer, a battery electrically connected to the circuit board; a swivel bracket receivable in the top recess of the housing, the swivel bracket having a bottom end pivoted to one end of the top recess of the housing by hinge means, a top end, and an opening between the bottom end and top end of the swivel bracket; a movable rack receivable in the opening of the swivel bracket, the movable rack having a bottom end pivoted to one end of the opening of the swivel bracket by hinge means and a top end opposite to the bottom end of the movable rack; a lens holder receivable with the movable rack in the opening of the swivel bracket, the lens holder having a bottom end pivoted to the top end of the movable rack and holding an image forming lens that is electrically connected to the circuit board and the shutter release for taking pictures for enabling the image data thus obtained to be stored in the memory card that is inserted into the memory card slot; and a lock release mounted in the housing and adapted to lock the lens holder and the movable racket to the swivel bracket and to lock the swivel bracket to the housing.

Further, the housing has a power input terminal electrically connected to a charging circuit of the circuit board for charging the battery with an external power source.

Further, the housing has clamp means bilaterally provided at the top side thereof adjacent to the swivel bracket for securing a business card.

Further, the movable rack has a bottom hook hole. The lock release comprises a track fixedly mounted inside the housing, a button suspending outside the housing adjacent to the track, a bevel-edged actuating rod the perpendicularly extended from a bottom side of the button and inserted into the track, a sliding hook slidably mounted in the track and disposed in close contact with the bevel-edged actuating rod for hooking in the bottom hook hole of the movable rack, and a spring member mounted inside the track and connected between one end of the track and one end of the sliding hook.

Further, the hinge means that pivotally connect the swivel bracket to the housing and the movable rack to the swivel bracket each comprise a barrel-like fixed hinge member, which has a mounting portion fastened to the swivel bracket or the movable rack, a torsional spring inserted into the barrel-like fixed hinge member, the torsional spring having a first end affixed connected to the barrel-like fixed hinge member and a second end opposite to the first end, and a movable hinge member, which has a connecting rod extended from one end thereof and fastened to the second end of the torsional spring in the barrel-like fixed hinge member and a mounting rod extended from an opposite end thereof and fastened to the housing or the swivel bracket.

### BRIEF DESCRIPTION OF THE DRAWINGS

FIG. 1 is an exploded view of a multipurpose image pickup device according to the present invention.
FIG. 2 is an exploded view of a part of the present invention, showing the structure of the lock release.
FIG. 3 is an exploded view of a part of the present invention, showing the structure of the hinge.
FIG. 4 is an elevational assembly view of the multipurpose image pickup device according to the present invention.
FIG. 5 is a sectional view of the multipurpose image pickup device according to the present invention.
FIG. 6 is a schematic drawing of the present invention, showing the multipurpose image pickup device set for use as a webcam.
FIG. 7 is a schematic drawing of the present invention, showing the multipurpose image pickup device set for business card picture shooting.

### DETAILED DESCRIPTION OF THE INVENTION

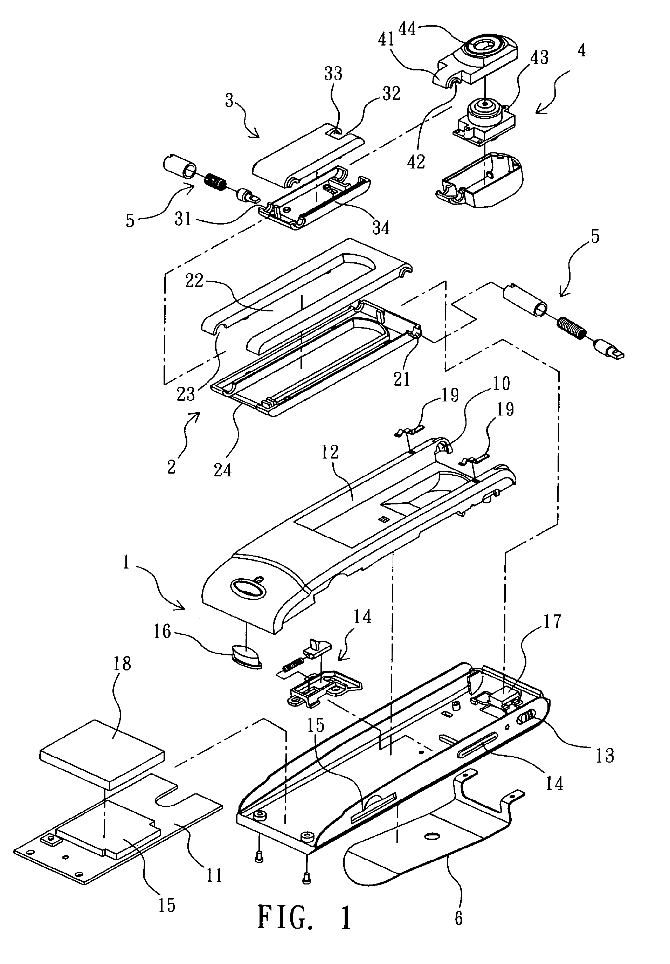

Referring to FIG. 1, a multipurpose image pickup device in accordance with the present invention is shown comprised of a housing **1**, a swivel bracket **2**, a movable rack **3**, and a lens holder **4**.

The housing **1** is formed of two narrow elongated cover shells and holding a circuit board **11** on the inside, having a longitudinal top recess **12** on the top wall for accommodating the swivel bracket **2**, the movable rack **3** and the lens holder **4**. As illustrated, the housing **1** has provided at a suitable location, for example, one lateral side a mode selection switch **13**, a lock release **14,** and a memory card slot **15.** The mode selection switch **13** can be switched between the computer connection mode and the picture shooting mode. When pressed the lock release **14,** the swivel bracket **2** or the movable rack **3** is unlocked for free movement. The detailed action of the lock release **14** will be discussed further. The memory card slot **15** is for receiving a memory card, for example, SD card (not shown) for storing every image file obtained through the lens holder **4** under the picture shooting mode. Further, a shutter release **16** is provided at a suitable location of the housing 1, for example, the front side. When the user pressed the shutter release **16,** the image forming lens **43** that is mounted inside the lens holder **4** is opened to take a picture. A communication port **17,** for example, USB port is provided at the rear side of the housing **1** for connection to a computer.

Further, a battery **18** is built in the housing **1** to provide the necessary working voltage to the image forming lens **43** of the lens holder **4** and the memory card in the memory card slot **15** of the circuit board **11** when the multipurpose image pickup device is in the picture shooting mode and not connected to a computer. The battery **18** is a rechargeable battery. A power input terminal (not shown) is mounted in the housing **1** and electrically connected to a charging circuit of the circuit board **11** for charging the battery **18** with city power supply through a power adapter (not shown).

Further, two clamps **19** are bilaterally provided at the top side of the housing **1** for securing a business card or the like. The housing **1** further has two axle holes **10** bilaterally aligned at one end of the longitudinal top recess **12** for the mounting of the swivel bracket **2.**

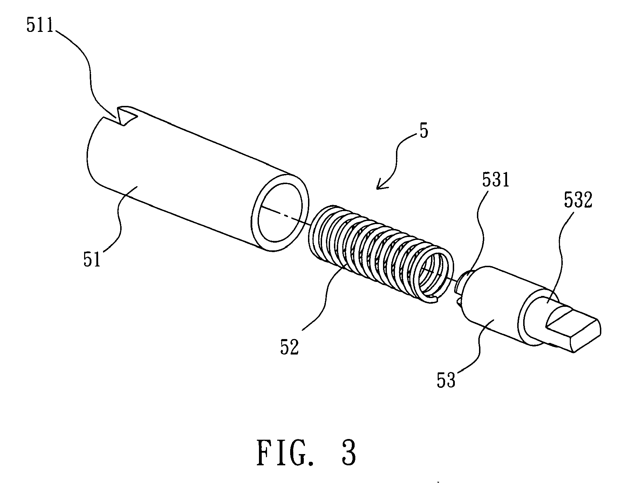

The swivel bracket **2** is an elongated flat frame receivable in the longitudinal top recess **12,** having two pins **21** bilaterally and transversely disposed at one end and respectively pivotally coupled to the axle holes **10** of the housing **1** such that the swivel bracket **2** is turnable relative to the housing **1** in and out of the longitudinal top recess **12**. Further, in order to provide the function of having the swivel bracket **2** be automatically ejected out of the top recess **12** of the housing **1**, a hinge **5** is provided between each pivot pin **21** of the swivel bracket **2** and the corresponding axle hole **10** (see FIG. 3). The structure of the hinge **5** will be discussed further. The swivel bracket **2** has an opening **22** for receiving the movable rack **3** and the lens holder **4**. Further, the swivel bracket **2** has two axle holes **23** bilaterally disposed at the top end for the coupling of the movable rack **3**, and a transverse stop rod **24** disposed adjacent to the axle holes **23** for stopping the movable rack **3** in the extended position.

The movable rack **3** is an elongated flat frame having a width corresponding to the opening **22** of the swivel bracket **2.** Further, the movable rack **3** has two pins **31** bilaterally and transversely disposed at the bottom end and respectively pivotally coupled to the axle holes **23** of the swivel bracket **2** through a respective hinge **5** such that the movable rack **3** is turnable relative to the swivel bracket **2** and can be automatically ejected out of the swivel bracket **2**. The movable rack **3** further has a top notch **32** on the top end and two pivot holes **33** at two sides of the top notch **32** for the coupling of the lens holder **4**, and a bottom hook hole **34** for receiving the lock release **14** to lock the movable rack **3** in the received position. When the user pressed the lock release **14**, the lock release **14** is disengaged from the bottom hook hole **34** to unlock the movable rack **3**, enabling the swivel bracket **2** and the movable rack **3** to be respectively ejected out of the longitudinal top recess **12** and the opening **22**.

The lens holder **4** has a width approximately equal to the movable rack **3**, a bottom bar **41** extended from the bottom end, two pivot pins **42** respectively and transversely extended from the bottom bar **41** at two sides and respectively pivoted to the pivot holes **33** of the movable rack **3,** and a lens hole **44** corresponding to the image forming lens **43.** When light enters the lens hole **44,** the image forming lens **43** picks up the image of the incident light.

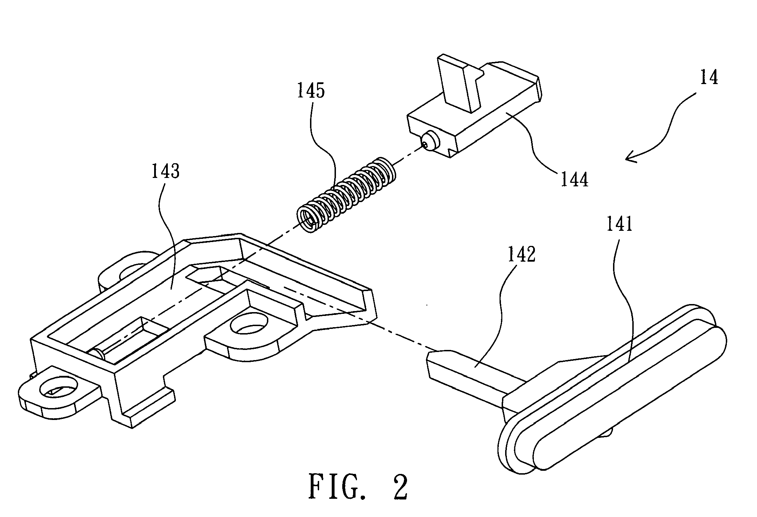

Referring to FIG. 2, the lock release **14** comprises a track **143** fixedly mounted inside the housing **1,** a button **141** suspending outside the housing **1** adjacent to the track **143,** an actuating rod **142** perpendicularly extended from the bottom side of the button **141** and inserted into the track **143,** a sliding hook **144** slidably mounted in the track **143** and disposed in close contact with the beveled free end of the actuating rod **142,** and a spring member **145** mounted inside the track **143** and connected between one end of the track **143** and one end of the sliding hook **144.** The spring member **145** imparts a pressure to the sliding hook **144,** thereby holding the sliding hook **144** in the locking position where the sliding hook **144** is hooked in the bottom hook hole **34** to lock the movable rack **3.** When the user pressed the button **141,** the actuating rod **142** is forced to move the sliding hook **144** away from the bottom hook hole **34,** thereby unlocking the movable rack **3.**

Referring to FIG. 3, the hinge **5** comprises a barrel-like fixed hinge member **51,** which has a mounting portion **511** fastened to the associating pin **21** of the swivel bracket **2** or the associating pin **31** of the movable rack **3,** a torsional spring **52** inserted into the barrel-like fixed hinge member **51** and affixed with its one end to the inside of the barrel-like fixed hinge member **51,** and a movable hinge member **53,** which has a connecting rod **531** extended from its one end and fastened to the other end of the torsional spring **52** in the barrel-like fixed hinge member **51** and a mounting rod **532** extended from its opposite end and fastened to the associating axle hole **10** of the housing **1** or the associating axle hole **23** of the swivel bracket **2.** When the movable rack **3** is received in the opening **22** of the swivel bracket **2** and the swivel bracket **2** is received in the longitudinal top recess **12** of the housing **1,** the torsional spring **52** of each hinge **5** is twisted to preserve energy, and at the same time the sliding hook **144** is forced by the spring member **145** into engagement with the bottom hook hole **34** to lock the movable rack **3.** When unlocked, the torsional springs **52** of the hinges **5** release energy, thereby forcing the swivel bracket **2** out of the longitudinal top recess **12** of the housing **1** and the movable rack **3** out of the opening **22** of the swivel bracket **2.**

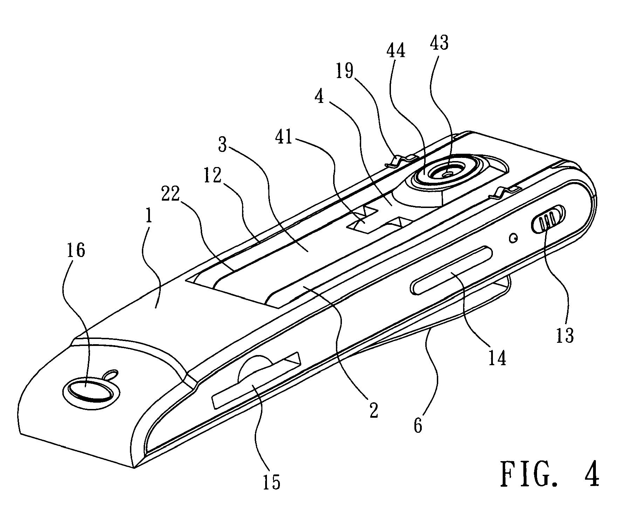

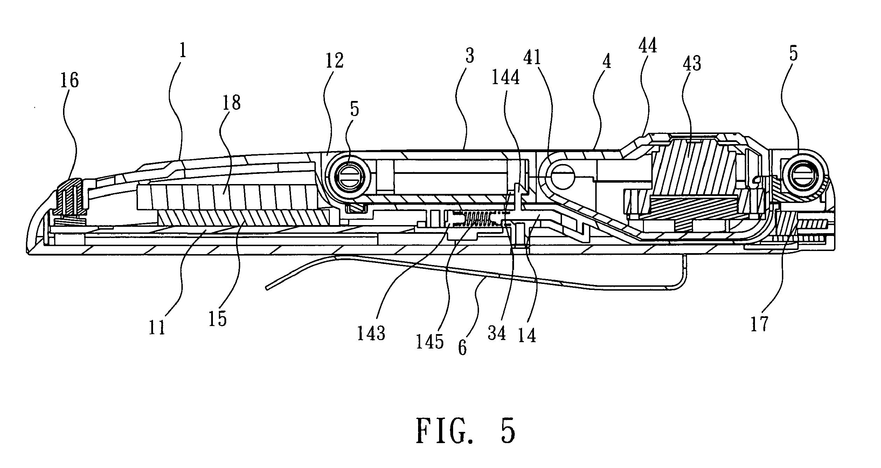

FIG. 4 is an elevational assembly view of the multipurpose image pickup device. FIG. 5 is a sectional view of the multipurpose image pickup device. Further, a clip **6** is provided at the bottom side of the housing **1.** By means of the clip **6,** the multipurpose image pickup device can be fastened to, for example, the belt on the user's body.

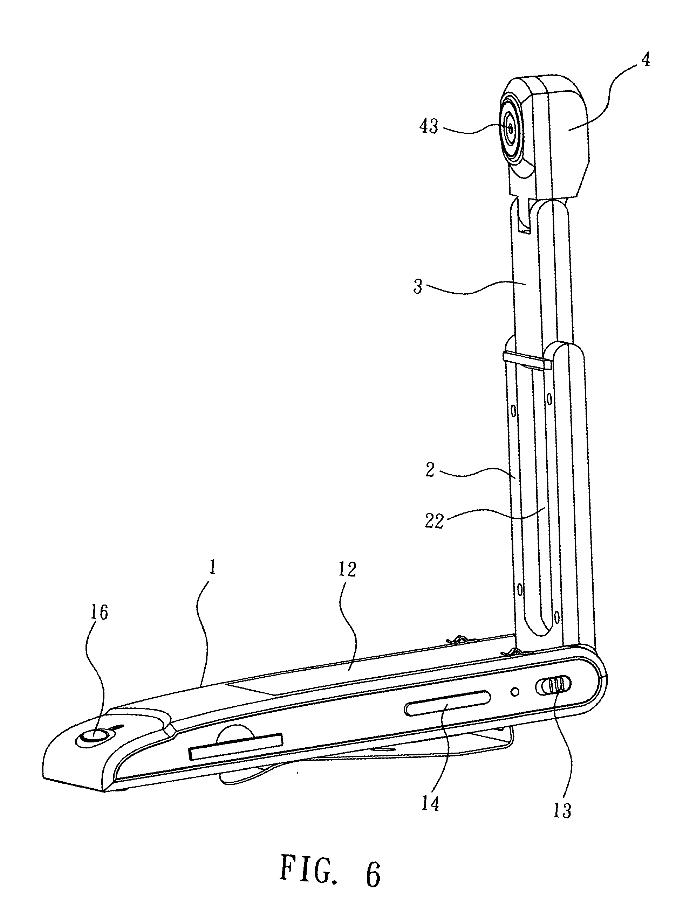

Referring to FIG. 6, the multipurpose image pickup device can be set for use as a webcam. In this case, the communication port **17** is connected to a computer, and the mode selection switch **13** is switched to the computer connection mode. When pressed the lock release **14** at this time, the swivel bracket **2** is extended out of the movable rack **3** and the movable rack **3** is extended out of the housing **1** due to the effect of the associating hinges **5.** Thereafter, bias the lens holder **4** relative to the swivel bracket **2** to aim the image forming lens **43** at the user of the computer for computer-to-computer video transmission.

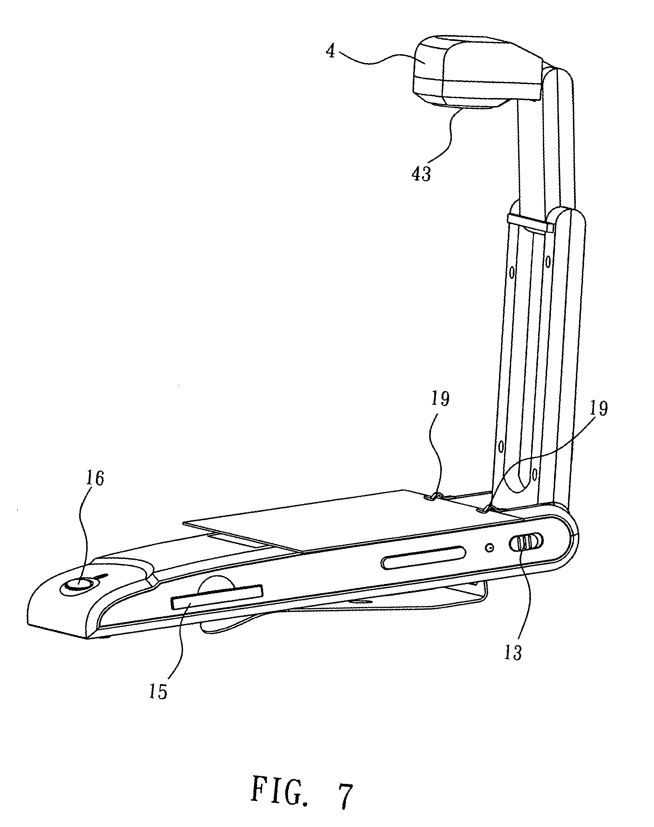

Referring to FIG. 7, when wishing to take the picture of a business card, switch the mode selection switch **13** to the business card picture shooting mode, and then fasten the business card to the top side of the housing **1** by the clamps **19,** and then bias the lens holder **4** relative to the swivel bracket **2** to aim the image forming lens **43** at the business card, and then press the shutter release **16** to take the picture of the business card and to have to digital image file thus obtained be stored in the memory card that is inserted into the memory card slot **15.** Therefore, when the multipurpose image pickup device is not connected to a computer, for example, when in the outside open field, the built-in battery **18** provides the necessary working voltage, and the user can use the multipurpose image pickup device to take the picture of a business card and store the image file in a memory card.

As indicated above, the invention provides a multipurpose image pickup device that can be used as a webcam, a business card camera, as well as a card reader. Further, the housing, the swivel bracket, the movable rack and the lens holder are pivotally connected to one another. By unlocked, the associating hinges automatically extend the parts one out of another to the operative position. The build-in battery and memory card slot of the housing enhances the mobility characteristic of the multipurpose image pickup device. When not connected to a computer, the multipurpose image pickup device can be independently used for taking the pictures of business cards and storing the digital image files thus obtained. The storage digital image files can be further transmitted to a computer for further recognition and data search.

A prototype of multipurpose image pickup device has been constructed with the features of FIGS. 1~7. The multipurpose image pickup device functions smoothly to provide all of the features discussed earlier.

Although a particular embodiment of the invention has been described in detail for purposes of illustration, various modifications and enhancements may be made without departing from the spirit and scope of the invention. Accordingly, the invention is not to be limited except as by the appended claims.

## Claims

1. A multipurpose image pickup device comprising:
a housing, said housing having a circuit board built therein, a top recess in a top side thereof, a mode selection switch electrically connected to said circuit board and switching between a computer connection mode and a business card picture shooting mode, at least one memory card slot electrically connected to said circuit board for receiving a memory card, a shutter release electrically connected to said circuit board, a communication port electrically connected to said circuit board for connection to a computer, a battery electrically connected to said circuit board;
a swivel bracket receivable in said top recess of said housing, said swivel bracket having a bottom end pivoted to one end of said top recess of said housing by hinge means, a top end, and an opening between the bottom end and top end of said swivel bracket;
a movable rack receivable in said opening of said swivel bracket, said movable rack having a bottom end pivoted to one end of said opening of said swivel bracket by hinge means and a top end opposite to the bottom end of said movable rack;
a lens holder receivable with said movable rack in said opening of said swivel bracket, said lens holder having a bottom end pivoted to the top end of said movable rack and holding an image forming lens that is electrically connected to said circuit board and said shutter release for taking pictures for enabling the image data thus obtained to be stored in the memory card that is inserted into said memory card slot; and
a lock release mounted in said housing and adapted to lock said lens holder and said movable rack to said swivel bracket and to lock said swivel bracket to said housing.

2. The multipurpose image pickup device as claimed in claim 1, wherein said housing has a power input terminal electrically connected to a charging circuit of said circuit board for charging said battery with an external power source.

3. The multipurpose image pickup device as claimed in claim 1, wherein said memory card slot is a SD card type memory card slot.

4. The multipurpose image pickup device as claimed in claim 1, wherein said housing has clamp means bilaterally provided at the top side thereof adjacent to said swivel bracket for securing a business card.

5. The multipurpose image pickup device as claimed in claim 1, wherein said swivel bracket has a transverse stop rod disposed at the top end thereof for stopping said movable rack in place when said movable rack is turned out of the opening of said swivel bracket.

6. The multipurpose image pickup device as claimed in claim 1, wherein said movable rack has a bottom hook hole; said lock release comprises a track fixedly mounted inside said housing, a button suspending outside said housing adjacent to said track, a bevel-edged actuating rod said perpendicularly extended from a bottom side of said button and inserted into said track, a sliding hook slidably mounted in said track and disposed in close contact with said bevel-edged actuating rod for hooking in the bottom hook hole of said movable rack, and a spring member mounted inside said track and connected between one end of said track and one end of said sliding hook.

7. The multipurpose image pickup device as claimed in claim 1, wherein the hinge means that pivotally connect said swivel bracket to said housing and said movable rack to said swivel bracket each comprise a barrel-like fixed hinge member, which has a mounting portion fastened to said swivel bracket or said movable rack, a torsional spring inserted into said barrel-like fixed hinge member, said torsional spring having a first end affixed connected to said barrel-like fixed hinge member and a second end opposite to said first end, and a movable hinge member, which has a connecting rod extended from one end thereof and fastened to the second end of said torsional spring in said barrel-like fixed hinge member and a mounting rod extended from an opposite end thereof and fastened to said housing or said swivel bracket.

8. The multipurpose image pickup device as claimed in claim 1, further comprising a clip fixedly provided at a bottom side of said housing for fastening.
